# EUROPÄISCHE PATENTSCHRIFT

(11) **EP 1 388 375 B1**
(45) Veröffentlichungstag und Bekanntmachung des Hinweises auf die Patenterteilung: **16.12.2009**
(21) Anmeldenummer: 03016117.8
(22) Anmeldetag: 16.07.2003
(51) Int. Cl.: B08B 6/00, B08B 5/04, B41F 23/00, B29C 59/10

(54) **Verfahren und Vorrichtung zur Reinigung von Oberflächen bewegter Materialbahnen**
Method and device for cleaning the surfaces of moving material webs
Procédé et dispositif pour nettoyer des surfaces de bandes de matériau en mouvement

(30) Priorität: 07.08.2002 DE 10236071
(43) Veröffentlichungstag der Anmeldung: 11.02.2004
(73) Patentinhaber: Softal electronic Erik Blumenfeld GmbH & Co. KG, 21107 Hamburg (DE)
(72) Erfinder: Prinz, Eckhard, Dipl.Phys., 22929 Hamfelde (DE); Martens, Bernd, Dipl.-Ing., 21244 Buchholz/Nordheide (DE); Förster, Frank, Dr.rer.nat., 22927 Hamburg (DE); Hildebrand, Reinhard, 79594 Inzlingen (DE); Trimborn, Christian, 79650 Schopfheim (DE)
(74) Vertreter: Fleck, Thomas

(56) Entgegenhaltungen:
- EP-A- 0 524 415
- WO-A-91/12095
- US-B1- 6 195 827

## Beschreibung

Die Erfindung betrifft ein Verfahren und eine Vorrichtung nach dem Oberbegriff des Anspruches 1 bzw. 3.

Kunststofffilme werden in großen Mengen hergestellt und veredelt. Für Verpackungszwecke sind zahlreiche Kombinationen der verschiedensten Kunststoffe bekannt, die aus werblichen Zwecken alle bedruckt sind. Alle Kunststoffe haben die Eigenschaft sich beim Transport in den Maschinen elektrostatisch aufzuladen und damit Partikel, wie Staubteilchen, Flusen und Fasern an ihre Oberfläche anzuheften. Diese Partikel müssen bei Lebensmittelverpackungen aus hygienischen Gründen vermieden bzw. entfernt werden und insbesondere beim Druckvorgang muss eine Säuberung der Oberfläche stattfinden, da eine Anreicherung der Partikel auf dem Druckklischee zu einer Qualitätseinbuße führt.

Papierbahnen haften neben Staub auch lose Fasern aus dem Herstellprozess an. Werden diese Fasern nicht vor einem Druckwerk entfernt, müssen die Druckwerke in kurzen Intervallen gereinigt werden, was unwirtschaftlich ist. Deshalb existieren am Markt die verschiedensten Bahnreinigungssysteme, die entweder berührend z.B. mit rotierenden Bürsten oder berührungslos z.B. mit Saugkanälen oder einer Kombination von beidem, die Oberfläche reinigen sollen. Die Wirkung beruht darauf, die anhaftenden Teilchen mechanisch zu lockern und mit einem scharfen Luftstrom von der Oberfläche zu entfernen. Die Wirkung dieser Systeme findet ihre Grenzen bei Kleinstpartikeln unter 30 µm Durchmesser. Diese werden in der oberflächennahen laminaren Luftschicht mitgenommen und sind mit Blas- oder Saugdüsen praktisch nicht zu entfernen.

In der EP 0 524 415 A2 ist eine Vorrichtung zum Entfernen von Staubpartikeln gezeigt, bei der mittels elektrischer Entladungen an in einem Absaugkanal angeordneten Sprühelektroden auf der Materialbahn anhaftende Partikel und die Materialbahn selbst aufgeladen werden zum Ablösen der Partikel. Die Partikel werden dann durch über einen Spülkanal, in dem die Elektroden angeordnet sind auf die Materialbahn geführte Spülluft weggespült und dann über einen über die Elektroden und den Spülkanal gelegenen Absaugkanal mit der Spülluft abgesaugt. Die Vorrichtung weist insoweit die Merkmale des Oberbegriffs des Anspruchs 3 auf, das mit der Vorrichtung auszuführende Verfahren entspricht einem Verfahren mit den Merkmalen des Oberbegriffs des Anspruchs 1.

Problematisch bei dieser Vorrichtung ist jedoch, dass die Partikel aus der Plasmaentladungszone ausgespült werden, insbesondere auch in den Bereich der bereits gereinigten Materialbahn, die den Bereich des Spülkanals und der Elektroden schon passiert hat. Hier besteht und die Gefahr, dass sich Partikel wieder auf der Materialbahn abscheiden, bevor sie abgesaugt werden können, und es so zu einer Restverschmutzung der eigentlich gereinigten Materialbahn kommt.

Aufgabe der Erfindung ist es daher, ein Verfahren und eine Vorrichtung zur Reinigung von Oberflächen zu schaffen, das bzw. die sowohl grobfaserigen als auch Feinstaub sicher und zuverlässig von der Oberfläche von Kunststofffilmen, Metallfolien und Papierbahnen entfernt.

Diese Aufgabe wird grundsätzlich durch die Kennzeichen der Ansprüche 1 bzw. 3 gelöst.

Erfindungsgemäß wird das durch eine Kombination eines Hochgeschwindigkeitssaugkanals mit einer Atmosphärendruck-Plasmaentladung (ADPE) erreicht. Die Hochgeschwindigkeitssaugdüse wird aus zwei metallenen Lippen gebildet, die in einem Abstand von einigen Millimetern voneinander parallel angeordnet sind. Die Lippen sind über elektrisch isolierende Seitenwände an einem Träger- und Absaugkanal angeflanscht, der mit einer Unterdruckquelle verbunden ist. Die Lippen sind im Abstand von einigen Millimetern einer Walze gegenüber angeordnet über welche die Bahn läuft. An die Lippen wird eine mittelfrequente elektrische Hochspannung angelegt, so dass eine sogenannte Atmosphärendruck-Plasmaentladung zwischen den Lippenkanten und dem Material entsteht. Die filamentierte ADPE lädt nun die Partikel elektrisch auf und den Untergrund ebenfalls mit gleicher Polarität. Die elektrischen Abstoßungskräfte reduzieren die Adhäsionskräfte der Partikel an der Oberfläche, so dass sie sich sicher mit dem scharfen Luftstrom entfernen lassen.

Die Lippenkante hat eine speziell entwickelte Geometrie, die besonders kräftige Turbulenzen erzeugt. Aufgrund der daraus resultierenden hohen Strömungsgeschwindigkeiten werden die Partikel sicher mit dem Luftstrom mitgerissen.

Die Reinigungswirkung ist auch bei hohen Bahngeschwindigkeiten von mehreren hundert Metern pro Minute wie sie auf Druckmaschinen üblich ist, gegeben. Bei besonders hoher Verschmutzung bzw. hohen Bahngeschwindigkeiten können auch mehrere solcher Plasmareinigungsdüsen parallel betrieben werden.

Papiere enthalten häufig an der Oberfläche abstehende Faserreste, die aber noch mit dem Untergrund verbunden sind. Bei derartigen Reinigungsaufgaben kann der Plasmareinigungsdüse eine mechanische Reinigung z. B. in Form einer rotierenden Bürste vorgeschaltet werden.

Die ADPE wird auch eingesetzt zur Erhöhung der Oberflächenenergie von z. B. Kunststoffbahnen, damit Lacke, Kleber und Druckfarben besser haften. Die Energie der ADPE kann so gewählt werden, dass neben der Reinigungswirkung auch die Oberflächenbehandlung in gewünschter Intensität stattfindet. Bei dieser kombinierten Anwendung ergeben sich die besten Druck- und Beschichtungsresultate. Fehlstellen durch Partikel auf der Bahnoberfläche werden genauso vermieden wie Poren durch schlechte Netzung der Farben und Lacke oder Fehldrucke durch unzureichende Farbaufnahme.

In Anspruch 2 ist ein vorteilhafte Weiterbildung des Verfahrens der Erfindung angegeben. Die Ansprüche 4 bis 19 sind auf vorteilhafte Ausgestaltungen der Vorrichtung nach der Erfindung gerichtet.

Im folgenden wird die Erfindung anhand der Zeichnungen beispielhaft näher beschrieben.

Es zeigen:
- Fig. 1a bis 1c: Prinzipskizzen der Vorrichtung nach der Erfindung mit dem Absaugkanal in verschiedenen Stellungen;
- Fig. 2: einen Querschnitt durch eine Ausführungsform des in einem Gehäuse angeordneten Absaugkanals zugeordnet einer Trägerwalze, über die eine zu behandelnde Materialbahn abläuft;
- Fig. 3: eine schematische Ansicht einer Reinigungsanlage mit einer Vorrichtung nach der Erfindung;
- Fig. 4a: eine Einzelheit einer Düsenlippe eines Absaugkanals;
- Fig. 4b: eine Ansicht einer Ausführungsform einer Düse des Absaugkanals; und
- Fig. 4c: einen Schnitt durch eine andere Ausführungsform einer Vorrichtung nach der Erfindung.

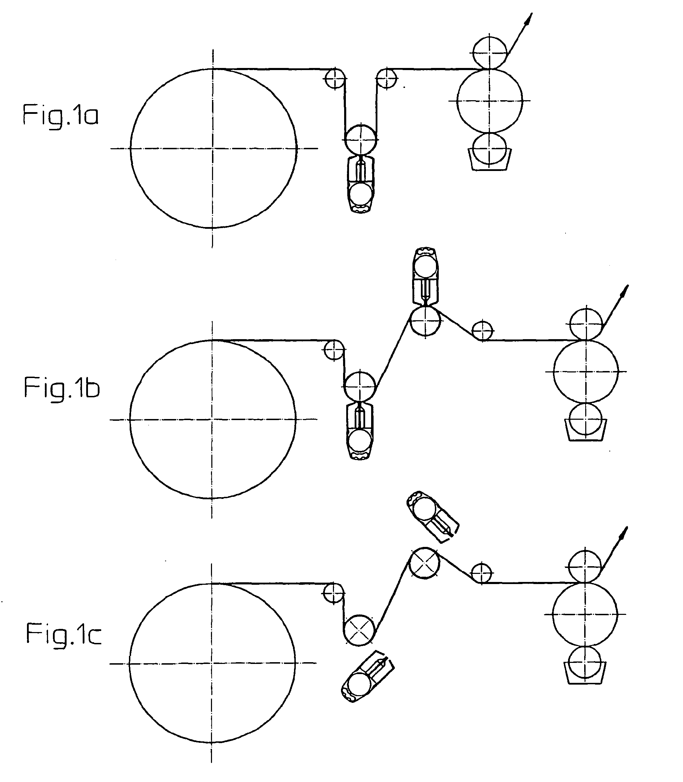

Figur 1a zeigt, wie eine Materialbahn von einer Vorratsrolle abläuft, durch eine Plasmareinigungsanlage geführt wird und dann weiterläuft in ein Druckwerk. Die Reinigung findet auf der unteren Seite statt, da auch diese bedruckt wird. Die Materialbahn kann durch weiterfolgende Druckwerke laufen, ohne erneut gereinigt werden zu müssen.

In Figur 1b ist eine beidseitige Reinigung vor dem ersten Druckwerk dargestellt. Die Rückseitenreinigung ist erforderlich, wenn die Bahn stark verschmutzt ist oder wenn die Rückseite in der Druckmaschine weiter verarbeitet wird z.B. durch Lackieren oder Kaschieren mit einer anderen Bahn.

Figur 1c zeigt die Situation von 1b mit geöffneten Reinigungsdüsen zum Materialbahneinzug.

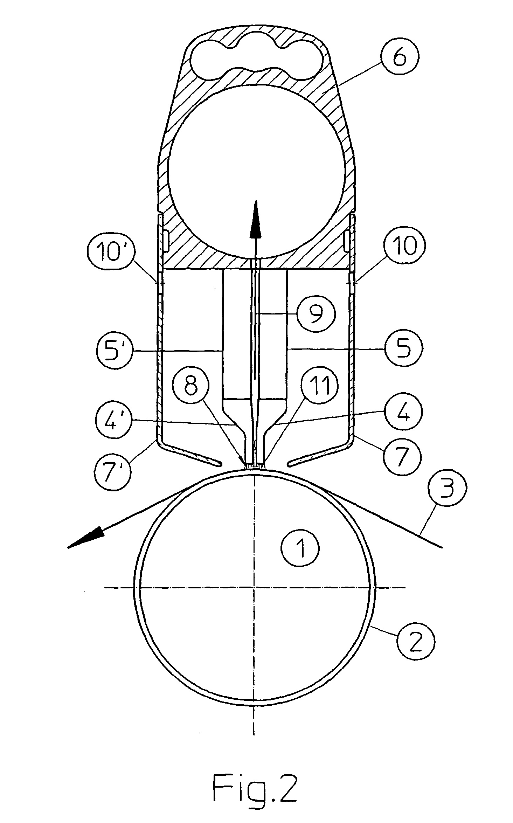

In der Figur 2 ist ein Querschnitt durch eine Plasmareinigungsstation dargestellt. Im einzelnen besteht die Gesamtanordnung aus folgenden Komponenten: 1 stellt die Trägerwalze dar, die mit einem spannungsfesten dielektrischen Material 2 beschichtet ist. Dieses Dielektrikum verhindert den Kurzschluss zwischen dem auf Massepotential liegenden Walzenkörper und den auf Hochspannung liegenden Düsenlippen 4. Der Spalt 8 zwischen der Materialbahn 3 und den Düsenlippen kann zwischen 0,5 und 10 mm betragen vorzugsweise zwischen 0,8 und 1,5 mm. Die parallelen Lippen 4 und 4' haben einen Abstand von 1 bis 5 mm voneinander vorzugsweise 1,5 bis 2,5 mm. Die Lippen sind an Wänden aus Isoliermaterial 5 und 5' befestigt, die sich in einem Abstand von 3 bis 10 mm vorzugsweise 4 bis 6 mm gegenüberstehen und den Saugkanal 9 bilden zusammen mit den Düsenlippen. Die Isolierwände sind am Träger- und Absaugrohr 6 befestigt. Um die hochspannungsführenden Düsenlippen vor Berührung zu schützen, sind sie eingehaust durch die Seitenwände 7 und 7' deren untere Enden einen Abstand zur Trägerwalze von 2 bis 10 mm vorzugsweise 2 bis 4 mm haben. Im Spalt zwischen Düsenlippen und Walzenoberfläche zündet die Atmosphärendruck-Plasmaentladung 11. Die anliegende sinusförmige mittelfrequente Wechselspannung wird in ihrer Höhe so gewählt, dass eine sichere Zündung gewährleistet ist. Typische Werte liegen zwischen 6 und 20 kV Spitze-Spitze. Die Frequenz wird je nach Bahngeschwindigkeit eingestellt zwischen 1 und 20 kHz vorzugsweise zwischen 5 und 10 kHz. Durch den Spalt 8 strömt während der Entladung Luft die durch den Kanal 9 und das Trägerrohr 6 abgesaugt wird. Der Unterdruck im Bereich der Düsenlippen liegt dabei zwischen 10 und 50 mbar vorzugsweise um 30 mbar. Die abgesaute Luftmenge strömt von außen nach durch Öffnungen 10 und 10' in den Seitenwänden 7 und 7' bzw. durch die Spalte der Seitenwände zur Trägerwalze.

Mit Düsenlippen aus Metall lassen sich nur dielektrische Bahnen reinigen. Bei Metallbahnen, metallisierten Bahnen oder durch Pigmente teilleitende Bahnen müssen die Lippen mit einer dielektrischen Barriere beschichtet sein, um einen elektrischen Kurzschluss zu verhindern. Die Beschichtung kann z. B. als plasma- oder flammgespritzte Keramikschicht auf dem Metallprofil der Lippen aufgebracht werden. Alternativ dazu können auch entsprechend profilierte Keramikrohre mit innenliegenden elektrischen Leitern verwendet werden.

Die Plasmareinigungsdüse wird der Bahnbreite angepasst. Sie sollte etwa 50 mm breiter sein als die maximale Bahnbreite. Die Düsen sind in der dargestellten Form bis etwa 3 m Länge baubar. Bei größeren Längen z.B. in Papiermaschinen müssen sie an entsprechenden stabilen Stahlkonstruktionen befestigt werden.

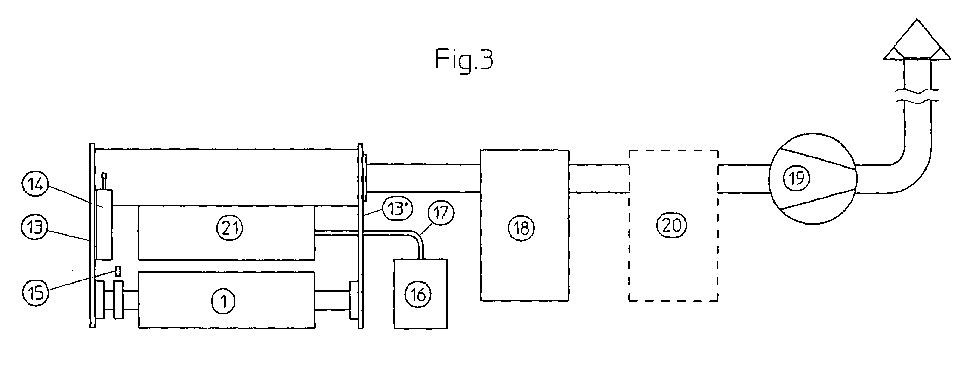

Die Figur 3 zeigt das Gesamtschema einer Reinigungsanlage. Sie besteht aus der eigentlichen Reinigungsstation, dem mittelfrequenten Hochspannungsgenerator, dem Filtersystem und der Unterdruckquelle.

Die Reinigungsstation setzt sich zusammen aus der Absaugdüse 21, der Trägerwalze 1 und den verbindenden Seitenschilden 13 und 13'. Der Pressluftzylinder 14 dient zum Abschwenken der Reinigungsdüse 21, um eine Bahn leichter einfädeln zu können. Die Bewegung der Trägerwalze 1 wird über den Initiator 15 überwacht, der im Stillstand die Plasmaentladung automatisch unterbricht. Der Generator 16 ist ein modifizierter Koronagenerator mit einer Frequenz unter 20 kHz. Der Generator ist über das Hochspannungskabel 17 mit den Düsenlippen verbunden. Die verschmutzte Abluft wird im Filtersystem 18 von den Partikeln gereinigt. Es handelt sich hier um Filter der Filterklasse S, die Partikelgrößen bis etwa 1 µm herausfiltern. Die Filter sind durch Vibratoren oder Pressluftstöße periodisch abreinigbar. Der Filter ist durch Rohre bzw. Schlauchleitungen mit der Station bzw. mit dem Ventilator 19 verbunden. Bei dem Ventilator 19 handelt es sich entweder um ein Hochdruckgebläse oder um einen Seitenkanalverdichter, der sicherstellt, dass an den Düsenlippen der erforderliche Unterdruck herrscht. Die Abluft muss über Dach abgeführt werden, da sie durch die Koronaentladung geringe Mengen Ozon enthält. Zur Beseitigung des Ozons kann ein weiterer Filter 20 in den Abluftstrang integriert werden, der mit Metalloxydkatalysatoren das Ozon wieder zu Sauerstoff rekombiniert.

Die über die Düsenlippen entladene elektrische Leistung beträgt für Reinigungszwecke 0,5 bis 2,0 kW pro Meter Bahnbreite. Wird auch eine intensive Oberflächenbehandlung gewünscht, kann die Leistung bis auf 10 kW pro Meter gesteigert werden. Dazu werden mehrere Düsenlippenpaare parallel betrieben, um die Temperaturgrenzen der Elektroden von max. 150 °C nicht zu überschreiten. Die Düsenlippenpaare können auch in einem gemeinsamen Gehäuse untergebracht sein und einer gemeinsamen Trägerwalze gegenüberstehen.

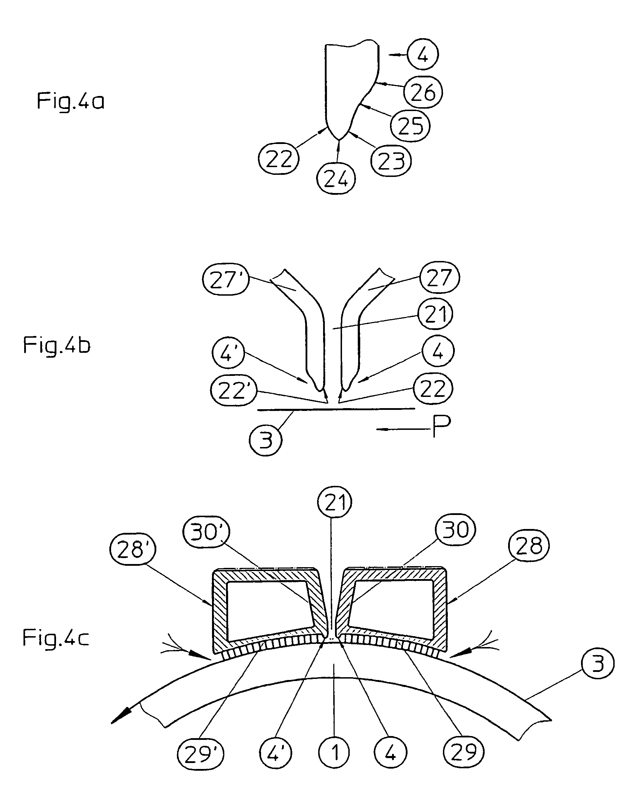

Fig. 4a zeigt das Profil einer einzelnen Düsenlippe 4 nach einer bevorzugten Ausführungsform der Erfindung. Auf der Innenseite der Absaugdüse 21 ist das Profil zunächst geradlinig, flach ausgebildet und geht an der Düsenmündung in eine konvex geformte Abrundung 22 über, die sich mit einem ähnlich oder gleich nach außen, also ebenfalls konvex, gerundeten Abschnitt 23 an der Außenseite des Profils schneidet und so eine Spitze bzw. Kante 24 bildet. An diesen konvex gerundeten Abschnitt 23 schließt sich eine konkav nach innen gewölbte Einbuchtung 25 an, die wiederum übergeht in eine nach außen gerichtete, konvexe Wölbung 26.

Die so geformte Außenseite des Düsenlippe 4 ist in der beschriebenen Reinigungsvorrichtung der Vorschubrichtung der Materialbahn 3 entgegengerichtet, wie durch den Pfeil P angedeutet.

Wie aus Fig. 4b und 4c zu ersehen ist, bildet die eine Düsenlippe 4 zusammen mit einer spiegelbildlich angeordneten zweiten Düsenlippe 4' die Absaugdüse 21. Nach Fig. 4b sind die Düsenlippen 4, 4' jeweils an den einander im Abstand der geforderten Düsenöffnung gegenüberliegenden Enden eines Winkelprofils 27, 27' oder L-Profils 27, 27' ausgebildet. Nach der Darstellung sind die Profile der Düsenlippen 4, 4' spiegelbildlich deckungsgleich geformt, was fertigungstechnische Vorteile hat. Es ist dies aber nicht zwingend erforderlich. Es kommt vielmehr nur darauf an, dass die zweite Düsenlippe 4', die in Vorschubrichtung P der Materialbahn 3 nach der ersten Düsenlippe 4 angeordnet ist, lediglich die an der Innenseite der Absaugdüse 21 und an der Düsenmündung liegende konvexe Abrundung 22' aufweist, die der Abrundung 22 an der ersten Düsenlippe 4 entspricht. Diese Ausformung der Düsenmündung fördert die Absaugwirkung der Absaugdüse 21. Die der Vorschubrichtung P abgewandte Außenseite der Düsenlippe 4' könnte anders, eigentlich beliebig geformt sein.

Wie oben bereits erwähnt, liegen die Düsenlippen 4, 4' während des Betriebs der Reinigungsvorrichtung auf Hochspannung, bestehen also aus einem elektrisch leitenden Material, das bei Bedarf mit einem Dielektrikum beschichtet sein kann. Die Winkel- oder L-Profile 27, 27' als Träger der Düsenlippen 4, 4' dagegen bestehen aus Isoliermaterial. Es wird damit vermieden, dass von der Oberfläche der Materialbahn 3 abgesaugte Partikel sich an den Wänden der Absaugdüse 21 anlagern.

Wie bereits beschrieben, wird durch Anlegen einer hochfrequenten Hochspannung an die Düsenlippen 4, 4' zwischen den Düsenlippen 4, 4' und der in Vorschubrichtung P bewegten Materialbahn 3 eine Atmosphärendruck-Plasmaentladung erzeugt, durch die die Materialbahn 3 und an ihr anhaftende Partikel mit gleicher Polarität elektrisch aufgeladen werden. Dadurch vermindert sich die Adhäsionskraft der Partikel an der Materialbahn 3 und sie können durch die Absaugdüse 21 mit Hilfe einer Unterdruckquelle, z.B. ein angeschlossenes Gebläse, abgesaugt werden. Der dabei in Vorschubrichtung P vor der Absaugdüse 21 erzeugte Luftstrom trifft nun auf die Außenfläche der ersten Düsenlippe 4. Durch deren oben beschriebene konvex-konkav-konvexe Form werden unmittelbar vor der Absaugdüse 21 starke Wirbel oder Turbulenzen im Luftstrom erzeugt, durch die Partikel von der Materialbahn 3 noch wirksamer abgelöst und mitgerissen werden. Die Reinigungswirkung der Vorrichtung wird verstärkt.

In Fig. 4c ist eine Alternativlösung zu Fig. 4b dargestellt. In diesem Fall wird die Plasmaentladung zwischen profilierten Keramikrohren 28, 28' mit innen liegenden elektrischen Leitern und der Materialbahn 3 erzeugt. Die Keramikrohre 28, 28' können, wie dargestellt, einen viereckigen Querschnitt haben. Die der Materialbahn 3 gegenüberliegende Wand 29, 29' sollte dem Verlauf der von der Trägerwalze 1 transportierten Materialbahn 3 angepasst sein. Die einander gegenüber stehenden Seitenwände 30, 30' der Keramikrohre 28, 28' bilden die Absaugdüse 21 und die profilierten Düsenlippen 4, 4' sind an den die Düsenmündung bildenden, einander gegenüberliegenden, unteren Kanten der Keramikrohre 28, 28' ausgebildet. Ihre Wirkung ist die gleiche wie oben beschrieben.

### Bezugszeichenliste:

- 1: Trägerwalze
- 2: dielektrische Schicht
- 3: Materialbahn
- 4,4': Düsenlippen
- 5: Wände aus Isoliermaterial
- 6: Absaugrohr (Trägerrohr)
- 7: Seitenwände
- 8: Spalt
- 9: Kanal
- 10: Zuluftöffnungen
- 11: Plasmaentladung
- 12: Reinigungsdüse
- 13,13': Seitenschilder
- 14: Pressluftzylinder
- 15: Initiator
- 16: Generator
- 17: Hochspannungskabel
- 18: Partikelfilter
- 19: Ventilator
- 20: Ozonfilter
- 21: Absaugdüse
- 22,22': Abrundung
- 23: konvex gerundeter Abschnitt
- 24: Spitze / Kante
- 25: konkave Einbuchtung
- 26: konvexe Wölbung
- 27,27': Winkel- oder L-Profile
- 28,28': Keramikrohre
- 29,29': Wände
- 30,30': Seitenwände

## Patentansprüche

1. Verfahren zur Reinigung der Oberflächen von Materialbahnen aus Kunststoffen, Papieren, Karton und deren Kombinationen von anhaftenden Partikeln vor Druck-, Beschichtungs-, Lackier- und Laminierprozessen, bei welchem durch eine transiente Atmosphärenplasmaentladung elektrische Ladungen auf die Partikel und ihre Auflageflächen übertragen werden und die aufgeladenen Partikel durch einen Hochgeschwindigkeitsluftstrom entfernt werden, **dadurch gekennzeichnet, dass** der Hochgeschwindigkeitsluftstrom durch Absaugen der Luft in einem zwischen zwei als Plasmaentladungselektroden ausgebildeten, einen Absaugkanal begrenzenden Lippen erzeugt wird.

2. Verfahren nach Anspruch 1, **dadurch gekennzeichnet, dass** die mittelfrequente elektrische Entladung zwischen den Lippen (4, 4') des Absaugkanals und einer gegenständigen Trägerwalze (1), welche die Materialbahn (3) führt, brennt.

3. Vorrichtung zur Reinigung der Oberflächen von Materialbahnen aus Kunststoffen, Papieren, Karton und deren Kombinationen von anhaftenden Partikeln vor Druck-, Beschichtungs-, Lackier- und Laminierprozessen mit einem an eine Unterdruckquelle angeschlossenen Absaugkanal, der auf die bewegte Materialbahn (3) gerichtet und an eine mittelfrequente Hochspannung zur Erzeugung einer Plasmaentladung zum Bahnmaterial angeschlossen ist, **dadurch gekennzeichnet, dass** der Absaugkanal diesen begrenzende Lippen (4, 4') aufweist, die als Plasmaentladungselektroden ausgebildet sind und dass der Absaugkanal und die Unterdruckquelle so gestaltet sind, dass ein Hochgeschwindigkeitsluftstrom erzeugbar ist, der in dem Bereich zwischen den Lippen (4, 4') in den Absaugkanal einströmt.

4. Vorrichtung nach Anspruch 3, **dadurch gekennzeichnet, dass** sie zum Zünden einer mittelfrequenten elektrischen Entladung zwischen den Lippen (4, 4') des Absaugkanals und einer gegenständigen Trägerwalze (1), welche die Materialbahn (3) führt, eingerichtet ist.

5. Vorrichtung nach einem oder mehreren der vorstehenden Ansprüche 3 bis 4, **dadurch gekennzeichnet, dass** auf jeder Seite der Materialbahn (3) ein Absaugkanal vorgesehen ist.

6. Vorrichtung nach einem oder mehreren der vorstehenden Ansprüche 3 bis 5, **dadurch gekennzeichnet, dass** der ein Düsensystem bildende Absaugkanal in einem Gehäuse (10, 10') untergebracht ist.

7. Vorrichtung nach Anspruch 6, **dadurch gekennzeichnet, dass** das Gehäuse (10, 10') mit dem Absaugkanal zur Öffnung des Spaltes zwischen der Trägerwalze (1) und dem Düsensystem drehbar oder schwenkbar ist.

8. Vorrichtung nach einem oder mehreren der vorstehenden Ansprüche 3 bis 7, **dadurch gekennzeichnet, dass** die Lippen (4, 4') zur Reinigung elektrisch leitfähiger Bahnen mit einer dielektrischen Schicht ummantelt sind.

9. Vorrichtung nach Anspruch 3 oder 8, **dadurch gekennzeichnet, dass** die in die Reinigungszone eingekoppelte elektrische Leistung so hoch gewählt wird, dass gleichzeitig mit der Reinigung eine Erhöhung der Oberflächenenergie der Trägerbahn stattfindet.

10. Vorrichtung nach Anspruch 9, **dadurch gekennzeichnet, dass** mehrere Reinigungsdüsen eines Düsensystems in einem gemeinsamen Gehäuse montiert sind und derselben Trägerwalze (1) gegenüberstehen.

11. Vorrichtung nach einem oder mehreren der vorstehenden Ansprüche 3 bis 10, **dadurch gekennzeichnet, dass** die in Vorschubrichtung P der Materialbahn (3) erste Düsenlippe (4) des Absaugkanals ein im auftreffenden Luftstrom Wirbel oder Turbulenzen auslösendes Profil (23, 25, 26) aufweist.

12. Vorrichtung nach Anspruch 11, **dadurch gekennzeichnet, dass** das Profil an der Außenseite der Düsenlippe (4) gebildet wird durch einen an die Düsenmündung unmittelbar anschließenden konvex nach außen gerundeten Abschnitt (23), eine daran anschließende konkave Einbuchtung (25) und eine daran anschließende konvexe Auswölbung (26).

13. Vorrichtung nach Anspruch 12, **dadurch gekennzeichnet, dass** der konvex nach außen gerundete Abschnitt (23) an der Düsenmündung sich schneidet mit einer an der Innenseite der Düsenlippe (4) ausgebildeten Abrundung (22).

14. Vorrichtung nach Anspruch 13, **dadurch gekennzeichnet, dass** der konvex nach außen gerichtete Abschnitt (23) an der Außenseite der Düsenlippe (4) mit der an ihrer Innenseite ausgebildeten Abrundung (22) eine Spitze oder Kante (24) bildet.

15. Vorrichtung nach Anspruch 12, **dadurch gekennzeichnet, dass** die der ersten Düsenlippe (4) gegenüber liegende zweite Düsenlippe (4') der Absaugdüse (21) an ihrer Innenseite eine Abrundung (22') aufweist, die der Abrundung (22) der ersten Düsenlippe (4) spiegelbildlich gleich ist.

16. Vorrichtung nach Anspruch 12, **dadurch gekennzeichnet, dass** die Absaugdüse (21) durch zwei sich gegenüberstehende Düsenlippen (4, 4') mit spiegelbildlich deckungsgleichem Profil gebildet ist.

17. Vorrichtung nach Anspruch 15 oder 16, **dadurch gekennzeichnet, dass** die Düsenlippen (4, 4') an einander gegenüberliegenden winkel- oder L-förmigen Trägerprofilen (27, 27') ausgebildet sind.

18. Vorrichtung nach Anspruch 15 oder 16, **dadurch gekennzeichnet, dass** die Absaugdüse (21) durch zwei sich gegenüberliegende Keramikrohre (28, 28') gebildet wird und die Düsenlippen (4, 4') an sich gegenüberstehenden, die Eintrittsöffnung der Absaugdüse (21) bildenden, unteren Kanten ausgebildet sind.

19. Vorrichtung nach Anspruch 18, **dadurch gekennzeichnet, dass** die Keramikrohre (28, 28') einen viereckigen Querschnitt haben und die Atmosphärenplasmaentladung zwischen der bewegten Materialbahn (3) und den ihr gegenüberstehenden Wänden (29, 29') der Keramikrohre (28, 28') mit Hilfe von in den Keramikrohren (28, 28') liegenden elektrischen Leitern erzeugt wird.

## Claims

1. A method for cleaning the surfaces of material webs of plastics, papers, cardboard and their combinations of adherent particles before pressure, coating, varnishing and laminating processes, wherein electric charges are transmitted to the particles and their bearing surfaces via a transient atmosphere plasma discharge and the charged particles are removed by a high velocity air stream, **characterised in that** the high velocity air stream is provided by drawing the air out into lips formed between two plasma discharge electrodes and thereby delineating a suction channel.

2. A method according to claim 1, **characterised in that** the middle frequency electric discharge bums between the lips (4, 4') of the suction channel and an opposite carrier roller (1) guiding the material web (3).

3. A device for cleaning the surfaces of material webs of plastics, papers, cardboard and their combinations of adherent particles before pressure, coating, varnishing and laminating processes with a suction channel connected to a vacuum source, which is directed towards the mobile material web (3) and connected to a middle frequency high voltage for generating a plasma discharge intended for the material web, **characterised in that** the suction channel includes lips (4, 4') delineating said channel, which are provided as plasma discharge electrodes and **in that** the suction channel and the vacuum source are arranged so that a high velocity air stream can be generated which flows into the suction channel in the area between the lips (4, 4').

4. A device according to claim 3, **characterised in that** it is arranged for igniting a middle frequency electric discharge burns between the lips (4, 4') of the suction channel and an opposite carrier roller (1) guiding the material web (3).

5. A device according to one or several of the preceding claims 3 to 4, **characterised in that** a suction channel is provided on both sides of the material web (3).

6. A device according to one or several of the preceding claims 3 to 5, **characterised in that** the suction channel forming a nozzle system is housed in a casing (10, 10').

7. A device according to claim 6, **characterised in that** the casing (10, 10') is rotary or swivel-mounted with the suction channel for opening the gap between the carrier roller (1) and the nozzle system.

8. A device according to one or several of the preceding claims 3 to 7, **characterised in that** the lips (4, 4') are coated with a dielectric layer for cleaning electrically conducting webs.

9. A device according to claim 3 or 8, **characterised in that** the electric power coupled in the cleaning area is selected so high that the surface energy of the carrier web is increased simultaneously with the cleaning process.

10. A device according to claim 9, **characterised in that** several cleaning nozzles of nozzle system are mounted in a common casing and are opposed to its carrier roller (1).

11. A device according to one or several of the preceding claims 3 to 10, **characterised in that** the first nozzle lip (4) of the suction channel includes in the forward direction P of the material web (3) a profile (23, 25, 26) triggering vortices or turbulences in the incident air flow.

12. A device according to claim 11, **characterised in that** the profile against the outer side of the nozzle lip (4) consists of a convex, outwardly rounded section (23) connected immediately to the nozzle outlet , a successive concave indentation (25) and finally a convex bulge (26).

13. A device according to claim 12, **characterised in that** the convex, outwardly rounded section (23) against the nozzle outlet intersects with a curvature (22) formed on the inner side of the nozzle lip (4).

14. A device according to claim 13, **characterised in that** the convex, outwardly rounded section (23) against the nozzle outlet of the nozzle lip (4) exhibits a tip or edge (24) with a curvature (22) formed on its inner side.

15. A device according to claim 12, **characterised in that** the second nozzle lip (4'), arranged opposite the first nozzle lip (4), of the suction nozzle (21) includes a curvature (22') on its inner side, which is symmetrically identical to the curvature (22) of the first nozzle lip (4).

16. A device according to claim 12, **characterised in that** the suction nozzle (21) consists of two nozzles lips (4, 4') arranged opposite to one another with symmetrical identical profile.

17. A device according to claim 15 or 16, **characterised in that** the nozzle lips (4, 4') are provided as angular or L-shaped carrier profiles (27, 27') opposite to one another.

18. A device according to claim 15 or 16, **characterised in that** the suction nozzle (21) is formed of two ceramic pipes (28, 28') opposite to one another and the nozzle lips (4, 4') are provided on lower edges, opposite to one another, forming the inlet opening of the suction nozzle (21).

19. A device according to claim 18, **characterised in that** the ceramic pipes (28, 28') have a square cross-section and the atmosphere plasma discharge between the mobile material web (3) and the opposite walls (29, 29') thereto of the ceramic pipes (28, 28') is generated using the electric conductors laid in the ceramic pipes (28, 28').

## Revendications

1. Procédé de nettoyage des surfaces de bandes de matériaux en synthétiques, papiers, carton et leurs combinaisons de particules adhésives avant d'effectuer des procédés sous pression, d'enduction, de vernissage et de stratification, dans lequel les charges électriques sont transmises aux particules et leurs surfaces d'appui par une décharge plasma transitoire de l'atmosphère et les particules chargées sont éliminées par un courant d'air grande vitesse, **caractérisé en ce que** le courant d'air grande vitesse est généré par aspiration de l'air entre des lèvres délimitant un canal d'aspiration constitué entre deux électrodes de décharge plasma.

2. Procédé selon la revendication 1, **caractérisé en ce que** la décharge électrique moyenne fréquence brûle entre les lèvres (4, 4') du canal d'aspiration et un rouleau porteur (1) opposé, guidant la bande de matériau (3).

3. Dispositif de nettoyage des surfaces de bandes de matériaux en synthétiques, papiers, carton et leurs combinaisons de particules adhésives avant d'effectuer des procédés sous pression, d'enduction, de vernissage et de stratification, avec un canal d'aspiration connecté à une source de vide, qui est orienté vers la bande de matériau mobile (3) et connecté à une haute tension moyenne fréquence pour générer une décharge plasma vers le matériau en bande, **caractérisé en ce que** le canal d'aspiration présente des lèvres (4, 4') délimitant celui-ci, qui sont conformées en électrodes de décharge plasma et **en ce que** le canal d'aspiration et la source de vide sont constitués de telle sorte qu'un courant d'air grande vitesse peut être généré pour pénétrer dans le canal d'aspiration dans la zone entre les lèvres (4, 4').

4. Dispositif selon la revendication 3, **caractérisé en ce qu'**il est disposé entre les lèvres (4, 4') du canal d'aspiration et un rouleau porteur (1) opposé, guidant la bande de matériau (3), pour déclencher la décharge électrique moyenne fréquence.

5. Dispositif selon une ou plusieurs des revendications précédentes 3 à 4, **caractérisé en ce qu'**un canal d'aspiration est aménagé de chaque côté de la bande de matériau (3).

6. Dispositif selon une ou plusieurs des revendications précédentes 3 à 5, **caractérisé en ce qu'**un canal d'aspiration constituant un système de buses est logé dans un carter (10, 10').

7. Dispositif selon la revendication 6, **caractérisé en ce que** le bâti (10, 10') est rotatif ou pivotant avec le canal d'aspiration pour ouvrir l'entrefer entre le rouleau porteur (1) et le système de buses.

8. Dispositif selon une ou plusieurs des revendications précédentes 3 à 7, **caractérisé en ce que** les lèvres (4, 4') sont recouvertes d'une couche diélectrique pour nettoyer des bandes électriquement conductrices.

9. Dispositif selon la revendication 3, **caractérisé en ce que** la puissance électrique couplée dans la zone de nettoyage est sélectionnée d'une valeur telle que l'énergie superficielle de la bande porteuse est augmentée en même temps que le nettoyage.

10. Dispositif selon la revendication 9, **caractérisé en ce que** plusieurs buses de nettoyage d'un système de buses sont installées dans un même bâti et sont opposées audit rouleau porteur (1).

11. Dispositif selon une ou plusieurs des revendications précédentes 3 à 10, **caractérisé en ce que** la première lèvre de buse (4) du canal d'aspiration, disposée dans le sens d'avance P de la bande de matériau (3) présente un profil (23, 25, 26) déclenchant des tourbillons ou des turbulences dans le courant d'air induit.

12. Dispositif selon la revendication 11, **caractérisé en ce que** le profil est constitué sur le côté externe de la lèvre de buse (4) à l'aide d'une partie (23) convexe, arrondie vers l'extérieur, directement connectée à l'embouchure de buse, d'une indentation concave (25) suivante et finalement d'une protubérance (26) convexe.

13. Dispositif selon la revendication 12, **caractérisé en ce que** la partie (23) convexe, arrondie vers l'extérieur au niveau de l'embouchure de buse coupe la partie arrondie (22) constituée sur le côté interne de la lèvre de buse (4).

14. Dispositif selon la revendication 13, **caractérisé en ce que** la partie (23) convexe, arrondie vers l'extérieur sur le côté externe de la lèvre de buse (4) constitue une pointe ou une tranche (24) avec la partie arrondie (22) constituée sur son côté.

15. Dispositif selon la revendication 12, **caractérisé en ce** la seconde lèvre de buse (4'), opposée à la première lèvre de buse (4), de la buse d'aspiration (21) présente une partie arrondie (22') sur son côté interne, qui est symétriquement identique à la partie arrondie (22) de la première lèvre de buse (4).

16. Dispositif selon la revendication 12, **caractérisé en ce que** la buse d'aspiration (21) est constituée de deux lèvres de buse (4, 4') opposées l'une à l'autre et de profil symétriquement identique.

17. Dispositif selon la revendication 15 ou 16, **caractérisé en ce que** les lèvres de buse (4, 4') sont constituées de profils porteurs (27, 27') angulaires ou en forme de L et opposés l'un à l'autre.

18. Dispositif selon la revendication 15 ou 16, **caractérisé en ce que** la buse d'aspiration (21) est constituée de deux tuyaux de céramique (28, 28') opposés l'un à l'autre et que les lèvres de buse (4, 4') sont constituées de tranches inférieures, opposées l'une à l'autre, constituant l'ouverture d'admission de la buse d'aspiration (21).

19. Dispositif selon la revendication 18, **caractérisé en ce que** les tuyaux de céramique (28, 28') ont une section carrée et que la décharge plasma de l'atmosphère entre la bande de matériau (3) mobile et les parois opposées (29, 29') des tuyaux de céramique (28, 28') est générée à l'aide des conducteurs électriques disposés dans les tuyaux de céramique (28, 28').
